# EUROPÄISCHE PATENTANMELDUNG

(11) **EP 3 489 059 A1**
(43) Veröffentlichungstag der Anmeldung: **29.05.2019**
(21) Anmeldenummer: 18173466.6
(22) Anmeldetag: 22.05.2018
(51) Int. Cl.: B60K 6/46, B60K 6/24, B60L 11/12, F01D 15/02, F01D 15/10, F02C 6/20

(54) **HILFSENERGIESYSTEM UND VERFAHREN FÜR HYBRIDFAHRZEUGE**

(30) Priorität: 28.11.2017 US 201715825011
(71) Anmelder: Nguyen Huu, Patrick, Irvine 92612 (US)
(72) Erfinder: Nguyen Huu, Patrick, Irvine 92612 (US)
(74) Vertreter: Meinke, Jochen

(57) **Zusammenfassung**

Hilfsenergiesystem zur Bereitstellung von Hilfsenergie für ein Fahrzeug, wobei das System umfasst: eine Hilfsenergieeinheit (200) mit einem kompakten Turbinentriebwerk (10), einem Generator (20), der mit dem kompakten Turbinentriebwerk (10) gekoppelt ist, und einer Gleichrichtereinheit (30), die mit dem Generator (20) gekoppelt ist, wobei die Hilfsenergieeinheit (200) so konfiguriert ist, dass sie entweder einen Wechselstrom oder einen Gleichstrom liefert; und mindestens eine Zusatzkomponente zur Anpassung der Hilfsenergieeinheit (200) an einen elektrischen Antriebsmotor für das Fahrzeug.

## Beschreibung

Im Allgemeinen bezieht sich die vorliegende Erfindung auf Hybridfahrzeugtechnologien. Insbesondere bezieht sich die vorliegende Erfindung auf Energiesystemtechnologien für Hybridfahrzeuge. Insbesondere bezieht sich die vorliegende Erfindung auf Serienantriebstechnologien für Hybridfahrzeuge.

Da die fossilen Ressourcen abnehmen und die Abgasnormen immer strenger werden, entwickelt sich die Transporttechnologie im Stand der Technik weiter, um mit den aktuellen Anforderungen Schritt zu halten und sichere, zuverlässige und verbraucherfreundliche Lösungen im Automobilbau anzubieten. Viele verwandte Technologien konzentrieren sich ausschließlich auf die Optimierung der Kraftstoffeffizienz und des Antriebsstrangs für bestehende Fahrzeuge mit Verbrennungsmotor oder rein elektrisch betriebene Fahrzeuge. Hybridfahrzeuge sind nach wie vor eine kleine, aber immer noch wachsende Minderheit in der Automobilindustrie. Während reine Elektrofahrzeuge einige Vorteile haben, ist die Infrastruktur zur Unterstützung von reinen Elektrofahrzeugen in vielen Regionen noch nicht vollständig entwickelt. Darüber hinaus sind bekannte Elektrofahrzeuge aufgrund von Herausforderungen in der Batterie- und Ladetechnik in ihrer Reichweite eingeschränkt. Weiterhin stellen sich für bekannte reine Elektrofahrzeuge andere Herausforderungen, wie Gewicht, Handhabung und Wartung in Bezug auf eine elektrische Infrastruktur, z.B. "das Netz", sowie Fragen im Zusammenhang mit dem Zugang zu sachkundigen Technikern durch einen Endbenutzer.

Im Stand der Technik bieten Hybridfahrzeuge eine Zwischenlösung für Leistungs- und Umweltfragen, die zwischen einem rein fossil angetriebenen Fahrzeug und einem rein elektrisch betriebenen Fahrzeug liegen, wodurch dem Verbraucher ein gewisses Maß an Komfort und Bequemlichkeit im Zusammenhang mit fossil angetriebenen Fahrzeugen sowie einige Vorteile eines Elektrofahrzeugs auf Kurzstrecken ermöglicht werden. Dabei verbessern Hybridfahrzeuge einige der größten Nachteile von reinen Elektrofahrzeugen, wie z.B. das Gewicht durch eine mögliche Reduzierung der Batteriegröße sowie die Reduzierung der langen Ladezeiten bei längeren Fahrten, wobei die Leistung und Energieeffizienz von Elektroantrieben mit der lokalen Stromerzeugung und Energiedichte von Verbrennungsmotoren kombiniert werden. So wurden verschiedene Konzepte für Hybridantriebe von verschiedenen Herstellern entwickelt; die meisten verwandten Konzepte sind jedoch in zwei Grundtypen unterteilt: "parallele" Hybride und "Serienhybride".

In Bezug auf parallele Hybridfahrzeuge verwendet ihr Antriebssystem zwei halbunabhängige Antriebsstränge (ein Antriebsstrang ist ein Elektromotor und ein Antriebsstrang ist ein Verbrennungsmotor), die beide mechanisch über eine Antriebswelle eines Fahrzeugs verbunden sind. Diese Parallel-Hybrid-Konfiguration verleiht dem Fahrzeug ein Beschleunigungs- und Leistungsverhalten, das mit einem reinem Elektrofahrzeug verbunden ist, z.B. beim Beschleunigen, während der Verbrennungsmotor den größten Teil der Last im Hochgeschwindigkeitsbetrieb oder im Reisemodus tragen kann, wobei die Verbrennung wesentlich kraftstoffsparender ist, insbesondere im Vergleich zum Beschleunigungs- oder "Stop-and-go"-Modus. Ein Beispiel für diese Parallel-Hybrid-Konfiguration ist die erste Generation des Honda® Insight®. Jedoch muss ein solches Fahrzeug die Leistung der beiden halbunabhängigen Antriebsstränge anpassen, um reibungslos und sicher arbeiten zu können.

Insbesondere sind die bekannten Parallel-Hybridantriebe mechanisch mit den mechanischen Ausgängen eines fossil betriebenen Motors verbunden, unter anderem einem Gasturbinenmotor, einem Verbrennungsmotor oder einem Elektromotor. In bekannten parallelen Hybridfahrzeugen sind der fossile Motor und der elektrische Antriebsmotor mit einer mechanischen Antriebswelle verbunden, die die Antriebsräder antreibt und damit das Gewicht und die mechanische Komplexität dieser bekannten Fahrzeuge erhöht. Weitere, bekannte parallele Hybridsysteme verwenden typischerweise einen Gasturbinenmotor als Ladegerät für den Energiespeicher oder als zusätzliche Stromquelle zur direkten mechanischen Betätigung der Antriebswelle in Verbindung mit einem zweiten Motor, der die Antriebswelle direkt betätigt. Für diese artverwandten "Parallelhybrid"-Konfigurationen werden zwei Arten von Kraftwerken (in der Regel Verbrennungs- und Elektrokraftwerke) eingesetzt, die beide eine gleichzeitige mechanische Verbindung zur Antriebswelle benötigen, um die Antriebsräder zu betätigen.

Bei bekannten Serien-Hybridfahrzeugen fehlt eine mechanische Verbindung zwischen einem Verbrennungsmotor und einer Antriebswelle, wobei der Verbrennungsmotor ausschließlich zur Stromerzeugung zur Ergänzung oder Ersetzung des Akkupacks verwendet wird, wobei das Serien-Hybridfahrzeug effektiv als reine Elektrofahrzeug fungieren kann, wenn der Akkupack während seines Betriebs ausreichend aufladbar ist. Solche bekannten Hybridfahrzeuge werden auch als "Extended-Range"-Elektrofahrzeuge bezeichnet, da der Verbrennungsmotor ausschließlich dazu dient, die Reichweite der Stromquelle zu erhöhen, ohne die Kapazität des Akkupacks selbst zu erhöhen oder von einer Netzquelle aufzuladen. Ein Beispiel für ein bekanntes Serien-Hybridfahrzeug ist der Chevrolet® Volt®, der einen "Range Extender" verwendet, z.B. einen lokalen Generator, der nach dem Entladen der Batterie Strom für den elektrischen Antriebsmotor erzeugt.

Daher besteht im Stand der Technik ein Bedarf an verbesserten Systemen und Verfahren für Hybridfahrzeuge, die eine bessere Leistung, eine bessere Kraftstoffökonomie, eine bessere Wiederaufladbarkeit der Batterie und einen besseren Elektromotor bieten als die bekannten Hybridfahrzeuge.

Bei der Bewältigung zumindest der Herausforderungen im Stand der Technik geht es um ein Hilfsenergiesystem und ein Verfahren zur Bereitstellung von Hilfsenergie für Hybridfahrzeuge, wie Serienhybridfahrzeuge sowie "Vollhybridfahrzeuge", z.B. Hybridfahrzeuge, die für den Betrieb in einer Betriebsart konfiguriert sind: über den Verbrennungsmotor, über den batteriebetriebenen Elektromotor oder über eine Kombination aus Verbrennungsmotor und Elektromotor. Im Allgemeinen umfassen das Hilfsenergiesystem und die Verfahren der vorliegenden Erfindung eine Hilfsenergieeinheit, die entweder für den Einbau bzw. die Integration in ein neues Fahrzeug oder die Nachrüstung eines bestehenden Fahrzeugs konfiguriert ist, wobei das Fahrzeug entweder aus einem Serienhybridfahrzeug, einem Vollhybridfahrzeug oder einem fossil betriebenen Fahrzeug besteht.

Zusätzlich eliminiert das Hilfsenergiesystem der vorliegenden Erfindung die im Stand der Technik vorhandene Notwendigkeit, sowohl den fossil betriebenen Motor als auch einen elektrischen Antriebsmotor mit einer Antriebswelle mechanisch zu verbinden, um die Räder eines Fahrzeugs anzutreiben. In Übereinstimmung mit einigen Ausführungen der vorliegenden Erfindung sind im Hilfsenergiesystem sowohl ein fossiler Motor als auch ein elektrischer Antriebsmotor elektrisch gekoppelt, wobei die damit verbundene mechanische Verbindung entfällt. Anstatt die umständliche mechanische Verbindung zu verwenden, hat das Hilfsenergiesystem der vorliegenden Erfindung eine elektrische Verbindungskonfiguration, wobei ein Generator elektrische Energie für den Betrieb eines elektrischen Hauptantriebsmotors bereitstellt, wobei der Generator parallel zu einem integrierten Energiespeicher, wie einer Batterieeinheit, arbeitet, wobei ein einzelner mechanischer Eingang, der einen einzelnen elektrischen Hauptantriebsmotor umfasst, mit der Antriebswelle zur Betätigung der Räder des Fahrzeugs gekoppelt ist.

Der Begriff "parallel" bezieht sich in Übereinstimmung mit der vorliegenden Erfindung auf das Hilfsenergiesystem unter gleichzeitiger Verwendung von (a) einem Energiespeicher (Batterie) und (b) einer Hilfsenergieeinheit, bestehend aus (1) einem kompakten Turbinenmotor und (2) einem Generator in Reihenschaltung, zum Antrieb eines elektrischen Hauptantriebsmotors, wobei (a) und (b) zueinander "parallel" arbeiten und wobei (b)(1) und (b)(2) in "Reihe" zueinander arbeiten. Diese erfindungsgemäße Konfiguration überwindet viele der damit verbundenen bekannten Herausforderungen.

In Übereinstimmung mit einigen Ausführungsformen der vorliegenden Erfindung umfasst das Hilfsenergiesystem eine Hilfsenergieeinheit mit einer funktionellen Gleichrichterschaltung, die so konfiguriert ist, dass sie eine variable Leistungsabgabe erzeugt, die mindestens den Anforderungen des Fahrzeugs entspricht, wodurch die Reichweite des Fahrzeugs erweitert wird, wie z. B. über die eines typischen Elektrofahrzeuges, z. B. des Fiat® 500e®, oder eines Hybridfahrzeugs, das ausschließlich mit elektrischer Energie betrieben wird, z. B. über etwa 120 Kilometern hinaus. Die Hilfsenergieeinheit weist ein kompaktes Turbinentriebwerk auf, das eine wirtschaftliche und effiziente Alternative für fossile Brennstoffe bietet, das so konfiguriert ist, dass es als einzige Stromquelle, als alternative Stromquelle, als Ersatzstromquelle in Bezug auf das Batteriesystem und als Ladestromquelle für ein Batteriesystem fungiert, wobei die Reichweite auf einen Bereich erweitert werden kann, der dem eines ausschließlich fossil betriebenen Fahrzeugs entspricht, z. B. mit einem Verbrennungsmotor.

In Übereinstimmung mit einigen Ausführungsformen der vorliegenden Erfindung ist das Hilfsenergiesystem, das die Hilfsenergieeinheit umfasst, so konfiguriert ist, dass es als Hauptenergiesystem und Antriebsstrang arbeitet, wenn es in einem vorhandenes Fahrzeug nachgerüstet wird, wobei die Hilfsenergieeinheit ein kompaktes Turbinentriebwerk, einen Generator und eine Gleichrichtereinheit umfasst, die über eine Gleichrichterschaltung betrieben werden kann. Für die Nachrüstung eines Fahrzeugs umfasst das Hilfsenergiesystem außerdem mindestens eine Komponente zur Durchführung eines Fahrzeugumbaus, wie z.B. einen Batteriepack, einen elektrischen Antriebsmotor und eine Motorsteuerung. Das kompakte Turbinentriebwerk ist so ausgelegt, dass es mit mindestens einem der folgenden Brennstoffe betrieben werden kann: Kerosin, JP-7, JP-8, Jet-A1, Diesel, wie normaler #2-Dieselkraftstoff, und Biodiesel. Das kompakte Turbinentriebwerk ist in einer Reihenschaltung mit einem Elektromotor gekoppelt, der als Wechselstromgenerator (ein effektiver kundenspezifischer Generator) konfiguriert ist; und der Generator ist mit der Gleichrichtereinheit gekoppelt, wobei die Gleichrichtereinheit Strom zum Laden des Akkupacks liefert, um den elektrischen Antriebsmotor direkt zu betreiben, wodurch ein reines Elektrofahrzeug in ein Serien-Hybridfahrzeug umgewandelt werden kann.

In Übereinstimmung mit einigen Ausführungsformen der vorliegenden Erfindung umfasst das kompakte Turbinentriebwerk ein hohes Leistungsgewicht, eine kompakte Größe und die Fähigkeit, mit einer Vielzahl verschiedener Kraftstoffarten im Vergleich zu herkömmlichen Fahrzeugen zu arbeiten. Die Hilfsenergieeinheit, bestehend aus dem Turbinentriebwerk und dem sonderangefertigten Generator, ist kompakter und leichter als alle anderen bekannten Automotoren mit ähnlicher Leistung. Das kompakte Turbinentriebwerk der vorliegenden Erfindung ist für die Aufnahme von Dieselkraftstoff ausgelegt, der an den meisten kommerziellen Tankstellen verfügbar ist, wobei das Fahrzeug zum langfristigen Betrieb im Leerlauf oder in seiner optimalen Geschwindigkeit fähig ist. Die Leistung kann kontinuierlich aus dem sonderangefertigten (drehmomentgesteuerten) Generator entnommen werden, wobei dem elektrischen Antriebsmotor bis zu ca. 15 kW Leistung zur Verfügung gestellt werden. Diese Leistungsaufnahme entspricht beispielsweise in einem Testfahrzeug einer maximalen Stromaufnahme von ca. 85 A bei einer Nennbetriebsspannung von ca. 176 V, was für die normale Fahrleistung und sogar für Beschleunigungsanforderungen mehr als ausreichend ist.

In Übereinstimmung mit einer Ausführungsform der vorliegenden Erfindung weist ein Hilfsenergiesystem zur Bereitstellung von Hilfsenergie in Bezug auf ein Fahrzeug auf: eine Hilfsenergieeinheit mit einem kompakten Turbinentriebwerk, einem Generator, der mit dem kompakten Turbinentriebwerk gekoppelt ist, und einer Gleichrichtereinheit, die mit dem Generator gekoppelt ist, wobei die Hilfsenergieeinheit so konfiguriert werden kann, dass sie entweder einen Wechselstrom oder einen Gleichstrom liefert; und mindestens eine Zusatzkomponente zum Anpassen der Hilfsenergieeinheit an einen elektrischen Antriebsmotor in Bezug auf das Fahrzeug.

In Übereinstimmung mit einer Ausführungsform der vorliegenden Erfindung weist ein Verfahren zur Herstellung eines Hilfsenergiesystems zur Bereitstellung von Hilfsenergie in Bezug auf ein Fahrzeug folgende Schritte auf: Bereitstellen einer Hilfsenergieeinheit mit einem kompakten Turbinentriebwerk, einem Generator , der mit dem kompakten Turbinentriebwerk gekoppelt ist, und mit einer Gleichrichtereinheit, die mit dem Generator gekoppelt ist, Konfigurieren der Hilfsenergieeinheit, um entweder einen Wechselstrom oder einen Gleichstrom zu liefern; und Bereitstellen mindestens einer Zusatzkomponente zum Anpassen der Hilfsenergieeinheit an einen elektrischen Antriebsmotor in Bezug auf das Fahrzeug.

In Übereinstimmung mit einer Ausführungsform der vorliegenden Erfindung weist ein Verfahren zum Bereitstellen von Hilfsenergie für ein Fahrzeug über ein Hilfsenergiesystem folgende Schritte auf: Bereitstellen des Hilfsenergiesystems, umfassend: Bereitstellen einer Hilfsenergieeinheit mit einem kompakten Turbinentriebwerk, einem Generator, der mit dem kompakten Turbinentriebwerk gekoppelt ist, und einer Gleichrichtereinheit, die mit dem Generator gekoppelt ist, Konfigurieren der Hilfsenergieeinheit, um entweder einen Wechselstrom oder einen Gleichstrom zu liefern, Bereitstellen mindestens einer Zusatzkomponente zum Anpassen der Hilfsenergieeinheit an einen elektrischen Antriebsmotor in Bezug auf das Fahrzeug, Durchführen einer Installation, Integration und/oder Nachrüstung der Hilfsenergieeinheit in Bezug auf das Fahrzeug, wodurch ein Hybridfahrzeug bereitgestellt wird, und Betreiben des Hybridfahrzeugs.

Die Erfindung ist nachstehend anhand der Zeichnungen beispielhaft näher erläutert. Diese zeigen in
Fig. 1 eine Seitenansicht eines kompakten Turbinentriebwerks gemäß einer Ausführungsform der vorliegenden Erfindung,
Fig. 2 eine Seitenansicht des kompakten Turbinentriebwerks gemäß Fig. 1 in Verbindung mit einem Generator,
Fig. 3 eine Seitenansicht eines elektrischen Antriebsmotors in Verbindung mit einem Schaltgetriebe über eine Adapterplatte,
Fig. 4 eine Draufsicht eine Batteriebox mit Akkupacks,
Fig. 5 eine schematische Ansicht der Batteriebox mit weiteren Komponenten,
Fig. 6 eine Tabelle, die einen Überblick über die wichtigsten Leistungsmerkmale einiger Beispielkomponenten einer Hilfsenergieeinheit gibt,
Fig. 7 ein Blockschaltbild, das ein Hauptenergiesystem eines Fahrzeugs darstellt,
Fig. 8 eine Tabelle, die die Leistungsmerkmale für Fahrzeuge vor der Nachrüstung mit einer Hilfsenergieeinheit und nach der Nachrüstung mit einer Hilfsenergieeinheit darstellt,
Fig. 9 einen Schaltplan, der eine Hilfsenergiesystemschaltung darstellt, die eine Gleichrichterschaltung für eine Gleichrichtereinheit umfasst,
Fig. 10A eine perspektivische Ansicht einer Turbinenwellenkupplung,
Fig. 10B eine Seitenansicht der Turbinenwellenkupplung,
Fig. 10C eine Rückansicht der Turbinenwellenkupplung,
Fig. 11 ein Flussdiagramm, das ein Verfahren zur Herstellung eines Hilfsenergiesystems zur Bereitstellung von Hilfsenergie für einen elektrischen Antriebsmotor eines Fahrzeugs darstellt, und in
Fig. 12 ein Flussdiagramm, das ein Verfahren zur Bereitstellung von Hilfsenergie für einen elektrischen Antriebsmotor eines Fahrzeugs über ein Hilfsenergiesystem darstellt.

Übereinstimmende Bezugszeichen kennzeichnen sich entsprechende Komponenten in den einzelnen Figuren der Zeichnung. Die Elemente der einzelnen Figuren sind aus Gründen der Einfachheit und Klarheit nicht unbedingt maßstabsgetreu gezeichnet. Beispielsweise werden die Dimensionen einiger Elemente in den Figuren im Vergleich zu anderen Elementen betont, um das Verständnis der verschiedenen Ausführungsformen zu erleichtern.

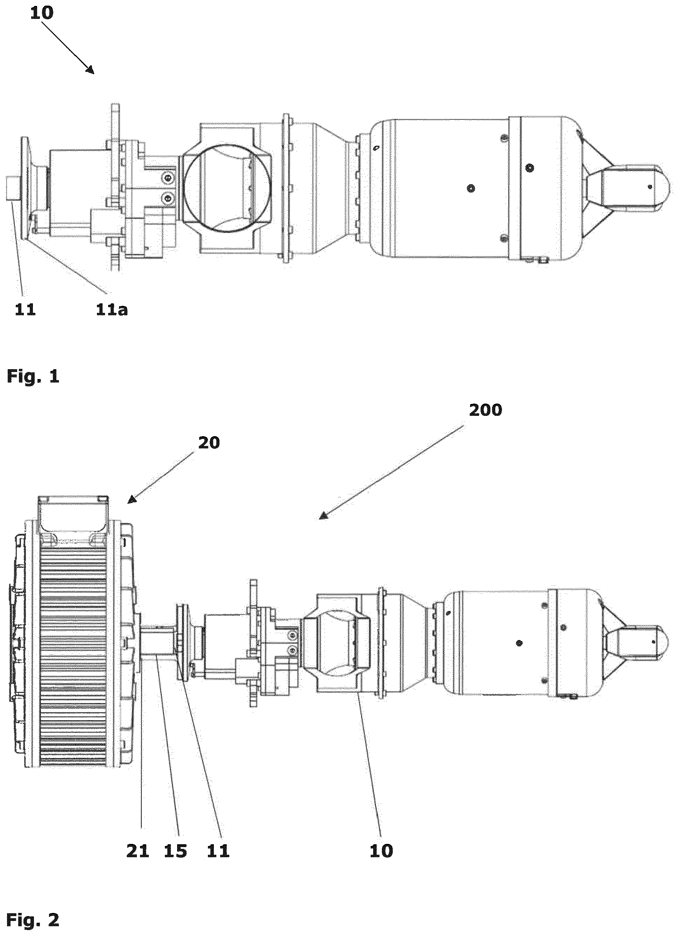

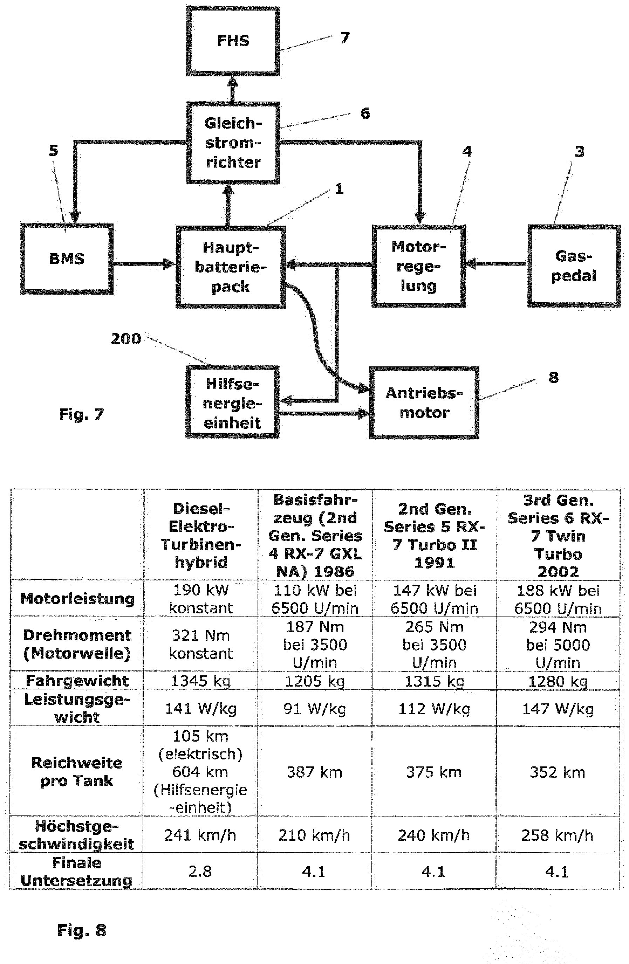

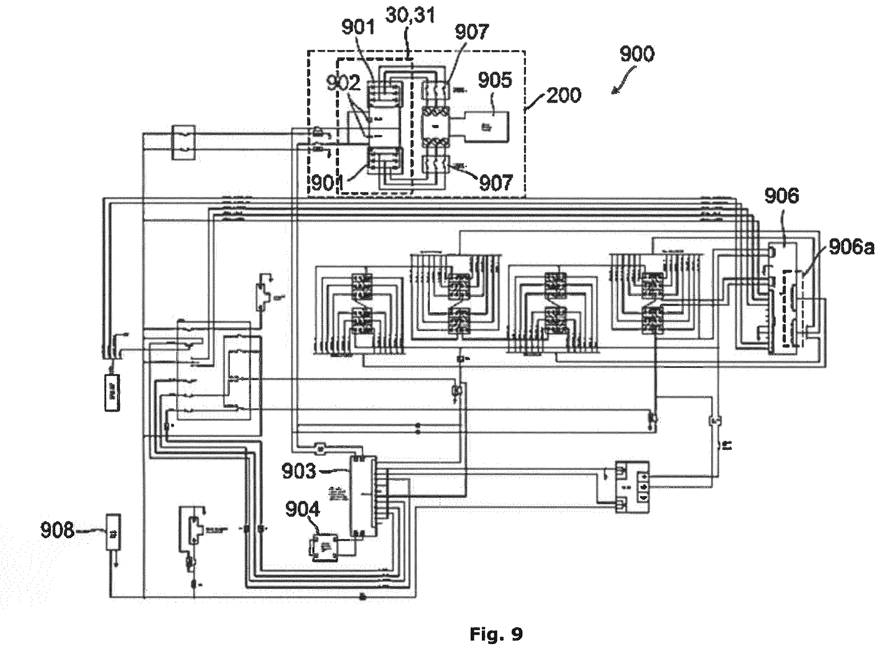

Fig. 1 zeigt in einer Seitenansicht ein kompaktes Turbinentriebwerk 10, entsprechend einer Ausführungsform der vorliegenden Erfindung. Eine Hilfsenergieeinheit 200 besteht aus einem kompakten Turbinentriebwerk 10, einem Generator 20 (Fig. 2) und einer Gleichrichtereinheit 30 (Fig. 9). Die Hilfsenergieeinheit 200 ist nachrüstbar in einem nicht dargestellten Fahrzeug, wobei das Fahrzeug zu einem Serien-Hybridfahrzeug umgebaut wird. Damit ist die Hilfsenergieeinheit 200 als eigenständige Einheit konfigurierbar, die für jeden elektrischen Antriebsmotor, z.B. einen Antriebsmotor 8 (Fig. 7), bis ca. 380V Wechselstrom oder ca. 380V Gleichstrom sowie bis ca. 15kW Leistung geeignet ist. Beispielsweise besteht das kompakte Turbinentriebwerk 10 aus einem JetCat® SPT15-RX Gasturbinentriebwerk mit einer Getriebeuntersetzung von ca. 14,1 : 1, der Generator 20 aus einem kundenspezifischen Heinzmann® PMS-150 Permanentmagnet-Synchrongenerator und die Gleichrichtereinheit 30 aus einer kundenspezifischen Vollwellengleichrichter- und Gleichrichterschaltung, wobei die Gleichrichterschaltung eine Kondensatorschaltung beinhaltet. Kundenspezifisch bedeutet in diesem Zusammenhang, dass das betreffende Gerät vom Hersteller auf die spezielle Umrüst- oder Nachrüstsituation angepasst ist.

Weiterhin unter Bezugnahme auf Fig. 1 weist das kompakte Turbinentriebwerk 10 eine Abtriebswelle 11 auf. Die Hilfsenergieeinheit 200 mit dem kompakten Turbinentriebwerk 10 ist kompakt, in sich geschlossen und so konfiguriert, dass sie entweder einen Wechselstrom oder einen Gleichstrom liefert. Das kompakte Turbinentriebwerk 10, bestehend aus dem Gasturbinentriebwerk JetCat® SPT15-RX 905 (Fig. 7) mit einer Untersetzung von ca. 14,1 :1, hat eine modifizierte Kernkomponente, die für den Betrieb mit entweder Dieselkraftstoff oder Biodieselkraftstoff ausgelegt ist. Darüber hinaus ist das kompakte Turbinentriebwerk 10 für den Betrieb mit einem Schmiermittelzusatz, wie z.B. einem silikonbasierten Schmiermittelzusatz, ausgelegt, um bestimmte Betriebsbedingungen zu verbessern. Der Schmiermittelzusatz wird verwendet, wenn das kompakte Turbinentriebwerk 10 mit leichterem Kohlenwasserstoffkraftstoff wie Kerosin, JP-7, JP-8 und Jet-A1 betrieben wird, wobei das Verhältnis des Schmiermittelzusatzes zum Kraftstoff etwa 1 : 20 beträgt. Beim Betrieb des kompakten Turbinentriebwerks 10 mit Diesel, z.B. ein #2-Dieselkraftstoff, der ein ausreichend schwerer Kraftstoff ist, ist ein Schmiermittelzusatz nicht erforderlich, kann aber wahlweise für die Langzeitverträglichkeit verwendet werden, wobei das Verhältnis des Schmiermittelzusatzes zu dem Kraftstoff einen Bereich von etwa 1 : 20 bis etwa 1 : 80 umfasst, und wobei das Verhältnis des Schmiermittelzusatzes zu dem Kraftstoff vorzugsweise etwa 1 : 20 beträgt, wobei das kompakte Turbinentriebwerk 10 eine Nennleistung von etwa 15 kW liefert. Das kompakte Turbinentriebwerk 10 hat einen optimalen Kraftstoffverbrauch bei ca. 75.000 U/min und eine maximale sichere Leistungsabgabe bei ca. 132.000 U/min. Das kompakte Turbinentriebwerk 10 hat eine Getriebeuntersetzung von ca. 14,1 : 1 vor der Gasturbinenabtriebswelle 11 und ist in der Lage, ein Drehmoment von ca. 32,7 Nm bei der Endübersetzung zu liefern.

Fig. 2 zeigt in einer Seitenansicht das kompakte Turbinentriebwerk 10, wie in Fig. 1 dargestellt, gekoppelt mit einem Generator 20, entsprechend einer Ausführungsform der vorliegenden Erfindung. Die Hilfsenergieeinheit 200 besteht aus dem kompakten Turbinentriebwerk 10, dem Generator 20 und einer Gleichrichtereinheit 30 (Fig. 9). Der Generator 20 hat eine Eingangswelle 21. Die Gasturbinenabtriebswelle 11 ist mit der Eingangswelle 21 des Generators 20, bestehend aus einem Permanentmagnetgenerator, wie insbesondere einem synchronen Permanentmagnetgenerator, mit einem dreiphasigen Wechselstrom (z.B. einer kundenspezifischer, sonderangefertigter Heinzmann® GmbH PMS-150) durch eine Turbinenwellenkupplung 15 gekoppelt. Der Generator 20 ist für eine Leistung von bis zu ca. 60 kW bei maximaler Drehmomentbelastung ausgelegt und damit für einen potenziell stärkeres kompaktes Turbinentriebwerk 10 oder ein schwereres Fahrzeug nutzbar, wobei der Generator 20 für eine maximale Drehmomentbelastung von bis zu ca. 32,5 Nm bei einer Motordrehzahl von ca. 6000 U/min ausgelegt ist.

Der Generator 20 (Fig. 2) besteht aus mindestens einer Generatorstufe (nicht abgebildet). Zum Beispiel umfasst die mindestens eine Generatorstufe eine Vielzahl von Generatorstufen, wie z.B. zwei Generatorstufen, die durch die Gleichrichtereinheit 30 geführt werden. Die Gleichrichtereinheit 30 (Fig. 9) umfasst eine Gleichrichterschaltung 31 (Fig. 9), wobei die Gleichrichterschaltung 31 mindestens eine entsprechende oder separate Vollweggleichrichterschaltung 901 (F IG. 9), wie z.B. einen Vollweggleichrichter, umfasst, die so ausgelegt ist, dass sie einen Strom von etwa 400 A bei einer Spannung von etwa 1000 V verkraftet und einen Gleichspannungsausgang erzeugt. Der resultierende Gleichstrom-Ausgang von jeweils mindestens einer entsprechenden Vollwellen-Gleichrichterschaltung 901, z.B. der Vollwellenbrückengleichrichter durch einen entsprechenden Kondensator 902, wie z.B. einen 20.000 µF-Kondensator, weiter gefiltert wird, wobei der entsprechende Kondensator 902 jegliche Spannungswelligkeit reduziert, bevor er Energie an ein primäres Energiesystem, wie das Hauptstromsystem 700 (Fig. 7) des Fahrzeugs überträgt.

Unter Bezugnahme auf Fig. 2 hat der Generator 20, bestehend aus dem Permanentmagnetgenerator, eine Ausgangsspannung, die so konfiguriert ist, dass sie direkt mit der Motordrehzahl einer Eingangswelle, wie z.B. der GasturbinenAbtriebswelle 11, korreliert und somit eine präzise Spannungsregelung ermöglicht. Ein Hilfsenergiesystem 100, das die Hilfsenergieeinheit 200 umfasst, ist über einen Hilfsstromkreis 900 (FIG. 9) betreibbar, wobei der Hilfsstromkreis 900 die Gleichrichtereinheit 30 umfasst, und wobei die Gleichrichtereinheit 30 die Gleichrichterschaltung 31 umfasst. Beispielsweise besteht die Gleichrichterschaltung 31 aus einer dreiphasigen Brückengleichrichterschaltung.

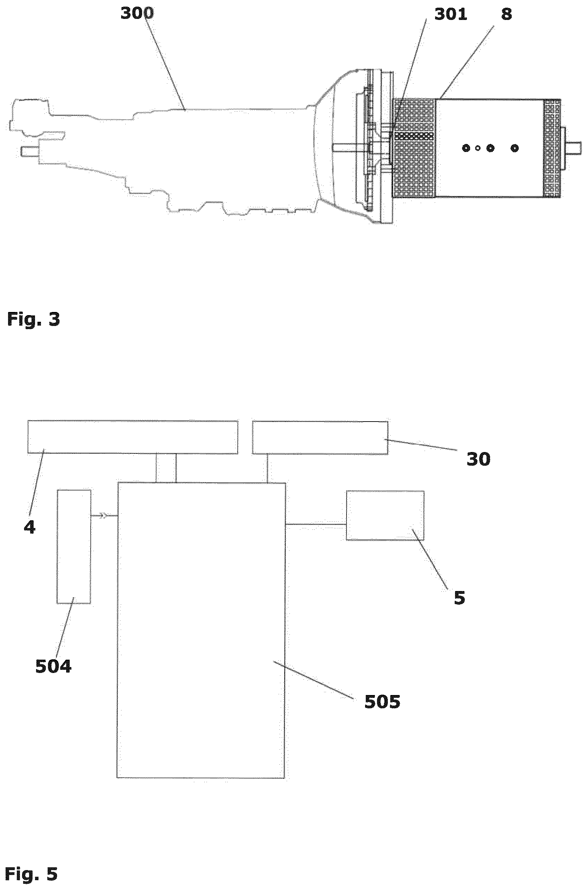

Fig. 3 zeigt einen elektrischen Antriebsmotor, wie z.B. einen Antriebsmotor 8 (Fig. 7), der mit einem Schaltgetriebe 300 über eine Adapterplatte 301 gekoppelt ist. Ein Basisfahrzeug, das über das System 100 um- bzw. nachgerüstet werden kann, besteht aus einem leichten Fahrzeug, wie einem Klein- oder Sportwagen. Beispielsweise besteht das Fahrzeug aus einem 1986er Mazda® RX-7® GXL®, z.B. mit dem FC3S® Fahrgestellmodell. Zur Hybridisierung oder Umrüstung des Fahrzeugs werden Modifikationen durchgeführt, die den Ausbau mindestens einer O-EM-Komponente (Original Equipment Manufacturer), wie z.B. eines OEM-Drehkolbenmotors, eines OEM-Abgassystems, eines OEM-Elektroniksystems, eines OEM-Kühlers, eines OEM-Anlassers und einer OEM-Lichtmaschine beinhalten.

Mit Bezug auf Fig. 3 umfasst die Umrüstung weiterhin die Installation mindestens einer Zusatzkomponente, wie z.B. des elektrischen Antriebsmotors, z.B. des Antriebsmotors 8, wobei der elektrische Antriebsmotor einen Netgain® Warp 9® oder Warp 7® HV® Hochspannungs-Gleichstrommotor 904 aufweist. Das Fahrzeug behält die OEM-Brandschutzwand, die zur sicheren Wärmedämmung zwischen Motorraum und Fahrgastraum angeordnet ist (nicht dargestellt). Der elektrische Antriebsmotor, z.B. der Antriebsmotor 8, ist z.B. über die Adapterplatte 301 direkt mit dem Schaltgetriebe 300 gekoppelt, wobei die Adapterplatte 301 zur Aufnahme einer Kupplung (nicht abgebildet) ausgelegt ist, und wobei das Schaltgetriebe 300 eine OEM-Übertragung aufweist, z.B., ein 5-Gang-Schaltgetriebe, wobei das Fahrzeug mit einem OEM-5-Gang-Schalthebel, einschließlich des Rückwärtsgangschalters, betreibbar bleibt, wodurch die Notwendigkeit eines elektronischen Rückwärtsschalters entfällt, wobei der elektrische Antriebsmotor einen Arbeitsbereich aufweist, der den eines OEM-Motors mit fossilen Brennstoffen übersteigt, z. B, der OEM-Drehmotor mit einer Drehzahl von etwa 5000 U/min bei hoher Fahrzeuggeschwindigkeit, die der Höchstgeschwindigkeit des Fahrzeugs in seinem höchsten Gang entspricht, z.B. etwa 225 km/h, und wobei der elektrische Antriebsmotor ein besseres Drehmoment und eine bessere Beschleunigung bei niedriger Fahrzeuggeschwindigkeit als ein Antriebsmotor mit einem eintourigen Antrieb, z.B. im Vergleich zu einem eintourigen elektrischen Antrieb in einem Bereich von etwa 0 bis etwa 50 km/h, beibehält. Die hohe Fahrzeuggeschwindigkeit umfasst eine Reichweite, die mindestens der des OEM-Fahrzeugs entspricht, wie z.B. eine Reichweite von ca. 205 km/h bis ca. 280 km/h. Der elektrische Antriebsmotor umfasst einen Drehzahlbereich von ca. 4000 U/min bis ca. 12000 U/min, wobei das Getriebe in niedrigen Gängen, z.B. den Gängen 1, 2 und 3 des 5-Gang-Schaltgetriebes, betrieben werden kann. Die Turbinenwellenleistung umfasst einen Bereich von mindestens annähernd der minimalen Turbinenwellenleistung, die zur Erzeugung von ca. 50 A elektrischem Strom bei einer Antriebsnennspannung von ca. 176 V erforderlich ist, wie z.B. einen Bereich von ca. 8,8 kW bis ca. 25 kW, während die kompakte Turbine 10 in einem Drehzahlbereich von ca. 50.000 bis ca. 150.000 U/min arbeitet. Der Generator 20 arbeitet mit einer Generatordrehzahl (in U/min) und mit einem Drehmoment, das dem Leistungs- und Untersetzungsverhältnis des kompakten Turbinentriebwerks 10 entspricht.

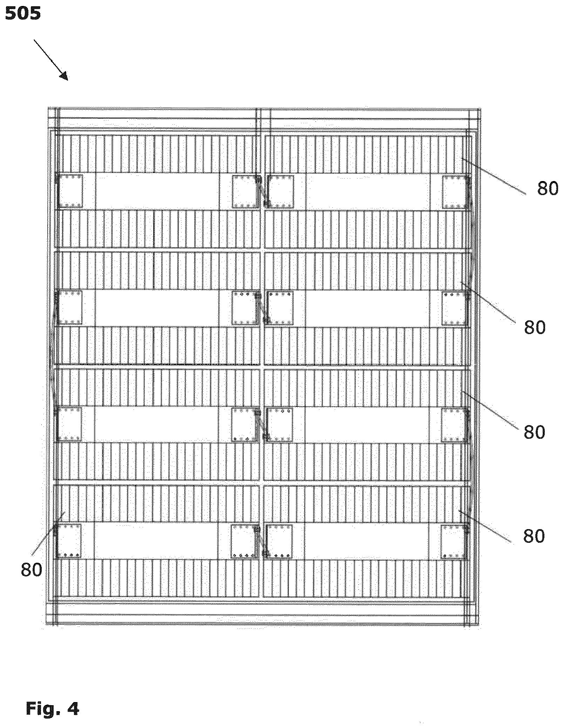

Fig. 4 zeigt eine Draufsicht eines Batteriepacks, wie des Hauptbatteriepacks 1 (Fig. 7) für ein Fahrzeug, der in einer Batteriebox 505 aufgenommen ist. Die Hybridisierung oder Umrüstung des Fahrzeugs umfasst ferner: Entfernen anderer Komponenten aus dem Kofferraum oder Laderaum, wodurch ein Freiraum verbleibt; und Auskleiden des Freiraumes mit einer elektrisch isolierenden Gummifolie.

Das System 100 umfasst weiterhin den Hauptbatteriepack 1, der in den Freiraum eingebracht und befestigt wird. Dieser Freiraum erstreckt sich z.B. von hinter dem Fahrersitz und dem Beifahrersitz zu einem hinteren Teil des Fahrzeugs, wodurch ein direkter Zugang über eine Heckklappe oder dgl. ermöglicht wird. Beispielsweise besteht der Hauptbatteriepack 1 aus einem Achtmodul-Batteriepack mit acht Batterien 80, wobei der Achtmodul-Batteriepack aus einem kundenspezifischen Enerdel® 6s8p Nickel-Mangan-Kobalt (NMC)-Zellensatz mit einem Gesamtgewicht einschließlich der Batteriebox 505 von ca. 115 kg und einer Gesamtkapazität von ca. 25 kWh besteht. Das Hilfsenergiesystem 100, bestehend aus der Hilfsenergieeinheit 200, umfasst ferner ein Batteriemanagementsystem (BMS) 906 (Fig. 7), wie ein Orion® BMS, das ca. 48 Zellenanzapfungen 906a und einen Halleffekt-Stromsensor (nicht abgebildet) in Bezug auf ein Pluskabel (nicht dargestellt) des Hauptbatteriepacks 1 zur Überwachung verwendet.

Fig. 5 zeigt eine schematische Ansicht der Batteriebox 505 mit weiteren Komponenten. Die Batteriebox 505 besteht aus einem Polymermaterial, wie z.B. Polycarbonat. Beispielsweise besteht das Polycarbonatmaterial aus einer Vielzahl von Lexan®-Polycarbonatplatten, z.B. mit einer Dicke von ca. 12,7 mm. Die Lexan®-Polycarbonatplatten werden durch mindestens einen Verbinder, z.B. über "Z17" isolierende Nylonschrauben, miteinander verbunden, wobei jeder Bolzen für eine Scherbelastung von etwa 220 N ausgelegt ist. Eine Motorregelung 4, ein Ladegerät 504 und andere Zusatzkomponenten sind montierbar, z.B. auf die Batteriebox 505, z.B. an einem Batterieboxdeckel 505. Alternativ sind die Zusatzkomponenten von der Oberseite der Batteriebox 505 weg montierbar, z.B. in sicheren und zugänglichen Fächern, um eine Belastung des Deckels zu vermeiden.

Bei der Hybridisierung oder Umrüstung kann ein 12 V Elektrosystem des Fahrzeugs erhalten bleiben, jedoch wird eine bereits vorhandene Blei-Säure-Autobatterie durch einen Wandler ersetzt, z.B. einen 635 W Gleichstromwandler 6 (Fig. 7), der so konfiguriert ist, dass er direkt Strom aus dem Akkupack 1 entnimmt. Der Gleichstrom / Gleichstrom-Wandler 6 versorgt alle 12 V Hilfsfunktionen des Fahrzeugs, das Batteriemanagementsystem 5, die Motorregelung 4 und eine elektrische Antriebssteuerung (nicht abgebildet), wie z.B. ein Hall-Effekt-Sensor (nicht abgebildet) im Motorraum (nicht abgebildet), die mechanisch durch den originalen Gaszug (nicht dargestellt) und eine Pedaleinheit, wie z.B. ein Gaspedal 3 (Fig. 7) betätigt wird. Die Antriebsleistung wird durch die Motorregelung 4 geregelt, z.B. den Netgain® Warp-Drive® Industrie-Motorcontroller (WDIC) 903 mit einer Gesamtspannungskapazität von ca. 300 V und einer Gesamtstromkapazität von ca. 1400 A.

Die Hybridisierung oder Umrüstung umfasst weiterhin die Montage der Hilfsenergieeinheit 200 neben dem Antriebsmotor 8 (Fig. 2) im Motorraum, z.B. in dem freien Raum, der durch Entfernen des OEM-Verbrennungsmotors frei wird (nicht abgebildet). Der Wechselstrom-Ausgang der Hilfsenergieeinheit 200 wird von einem Satz von 200 A Wechselstromsicherungen, wie z.B. einem Satz Turbinenschalter 907 (Fig. 9), vor dem Gleichrichterkreis 31 und hinter der Brandschutzwand übernommen, von dort aus parallel zum Batteriepack, z.B. dem Batteriepack 1. Für das kompakte Turbinentriebwerk 10 kann die Inbetriebnahme, Drehzahlregelung und Überwachung über eine externe Handheld-Bodenstation (GSU) erfolgen (nicht abgebildet), wobei jede andere Turbinenhandhabungseinheit implementiert werden kann und von der vorliegenden Erfindung erfasst wird, wobei das Gewicht des Antriebsmotors 8 und der Hilfsenergieeinheit 200 in einem vorderen Motorraum (nicht abgebildet) durch das Gewicht des Batteriepacks 1 und der elektrischen Zusatzkomponenten im Laderaum ausgeglichen wird, wobei das Hauptgewicht jedes Abschnitts über jeder Achse (nicht dargestellt) des Fahrzeugs liegt. Andere Turbinenhandhabungseinheiten umfassen einen Laptop oder ein Tablett, das die elektronische Steuereinheit (ECU) der Turbine steuert, sowie jede eingebaute Steuerung, die das gleiche Ergebnis erzielt, z. B. die Eliminierung eines Handheld-Geräts und die Neuverdrahtung der anderen Turbinensteuereinheit zu einem Armaturenbrett-Schalter-Cluster.

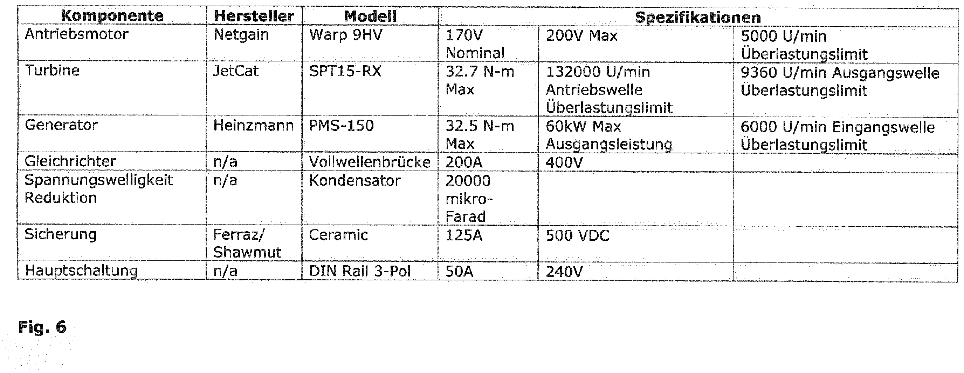

Die Tabelle gemäß Fig. 6 gibt einen Überblick über die wichtigsten Leistungsmerkmale einiger Beispielkomponenten der Hilfsenergieeinheit 200, in Übereinstimmung mit einigen Ausführungsformen der vorliegenden Erfindung. Einige Komponenten, wie die Brückengleichrichter, Kondensatoren und Wechselstromschalter, werden hierin allgemein offengelegt; jedoch kann jede dieser Komponenten auch so modifiziert werden, dass sie besonderen Spezifikationen für eine bestimmte Implementierung entspricht, z. B. für eine bestimmte Marke und ein bestimmtes Modell des Fahrzeugs oder um eine bestimmte Reihe von Leistungsmerkmalen zu erreichen. Das Hilfsenergiesystem 100 im Fahrzeug hat einen Sicherheitsfaktor von mindestens ca. 2,0 bezogen auf jede Komponente.

Dieses Blockschaltbild zeigt unter Bezugnahme auf Fig. 7 ein Hauptenergiesystem 700, z.B. wie im Hilfsenergiesystem 100 enthalten, eines Fahrzeuges. in Übereinstimmung mit einigen Ausführungsformen der vorliegenden Erfindung. Das Hauptstromsystem 700 besteht aus: einer Hauptbatterie 1, der Hilfsenergieeinheit 200, dem Gaspedal 3, der Motorsteuerung 4, dem Batteriemanagementsystem 5, dem Gleichstrom/Gleichstrom-Wandler 6, dem Fahrzeug-Hilfssystem (FHS) 7, wobei das Fahrzeug-Hilfssystem 7 mindestens einen Scheinwerfer (nicht abgebildet), eine Hupe (nicht abgebildet), einen Bremskraftverstärker (nicht abgebildet), Bremsleuchten (nicht abgebildet) usw. aufweist, und der Antriebsmotor 8. Das Gaspedal 3 betätigt den Motorcontroller 4; die Motorregelung 4 aktiviert den Hauptbatteriepack 1 und überträgt Energie an die Hilfsenergieeinheit 200.

Der Hauptbatterie-Pack 1 überträgt Energie an den Gleichstrom / Gleichstrom-Wandler 6, wobei die umgewandelte Spannung vom Wandler 6 das Fahrzeug-Hilfssystem 7, die Motorregelung 4 versorgt. Außerdem wird die Energie von der Motorregelung 4 und dem Batteriemanagementsystem 5 an den Hauptbatterie-Pack 1 zurückgegeben. Die Hauptbatterie 1 versorgt den Antriebsmotor 8 und die Hilfsenergieeinheit 200 den Antriebsmotor 8 mit Hilfsenergie.

Unter Bezugnahme auf Fig. 7 versorgt der Hauptbatterie-Pack 1 sowohl den Antriebsmotor 8 als auch das gesamte Fahrzeug-Hilfssystem 7 über den Gleichstrom / Gleichstrom-Wandler 6, wie z.B. einen Stepdown-Transformator. Die Leistung von der Hauptbatterie 1 zum Antriebsmotor 8 wird durch die Motorregelung 4 geregelt, der den Eingang vom Gaspedal 3 erhält. Der Hauptbatteriesatz 1 wird von dem Batteriemanagementsystem 5 gewartet und geschützt, wobei das Batteriemanagementsystem 5 den Hauptbatteriesatz 1 vor zu hohen Stromausgängen und Stromeinbrüchen während des Ladevorgangs schützt und die einzelnen Zellen des Hauptbatteriesatzes 1 für optimale Gesundheit, Lebensdauer und Leistung ausgleicht. Dieses Hauptstromsystem 700 umfasst in der Regel die Betriebskomponenten, wenn das Fahrzeug im vollelektrischen Betrieb, z. B. über den Systemkreis 900, betrieben wird (Fig. 9).

Unter Bezugnahme auf Fig. 7 wird, wenn das Fahrzeug im Hybridbetrieb betrieben wird, das kompakte Turbinentriebwerk 10 der Hilfsenergieeinheit 200 aktiviert und über ein Sicherheitsrelais (Fig. 9) mit anderen Komponenten des Hauptstromsystems 700 gekoppelt, wobei ein Satz von Dioden den Stromrückfluss in die Hilfsenergieeinheit 200 oder den Hauptbatterieblock 1 verhindert. Der Wechselstrom-Ausgang der Hilfsenergieeinheit 200 wird in Gleichstrom umgewandelt, dessen Amplitude durch die Turbinendrehzahl geregelt werden kann, und durch ein Paar 20.000 µF Kondensatoren 902 gefiltert und weiter geregelt, bevor er an das Hauptstromnetz angeschlossen wird (Fig. 9). Die Hilfsenergieeinheit 200 erhält zu diesem Zeitpunkt die Hauptlast des Hauptenergiesystems 700 und die Antriebslast aus dem Hauptbatterie-Pack 1, wodurch der Hauptbatterie-Pack 1 auf die Versorgung des Fahrzeug-Hilfssystems 7 verwiesen wird.

Die Hilfsenergieeinheit 200 ist gemäß Fig. 7 parallel zum Hauptbatterie-Pack 1 im Hauptstromnetz 700 geschaltet, so dass sich das Hauptstromnetz 700 die Last teilen und ggf. den Hauptbatterie-Pack 1 laden kann. Durch die Parallelschaltung kann das Fahrzeug bei Bedarf auch nur auf der Hilfsenergieeinheit 200 gefahren werden. Unabhängig von der Betriebsart werden alle Hilfssysteme über den Gleichstrom / Gleichstrom-Wandler 6 mit einer Eingangsspannung im Bereich von ca. 120 bis ca. 240 V versorgt, so dass der Gleichstrom/ Gleichstrom-Wandler 6 auch dann einen konstanten 12 V Ausgang für die Hilfssysteme beibehält, wenn die Hauptbatterie 1 nicht mehr in der Lage ist, das Fahrzeug zu betreiben. Zu den Zusatzsystemen gehören das Batteriemanagementsystem 5, die Motorsteuerung 4, Sicherheitsschütze (Fig. 9) und Fahrzeug-Nebenaggregate (ohne Abbildung) wie Scheinwerfer, Hupe, Blinker, Bremslicht und Bremskraftverstärker. Die Zusatzsysteme des Fahrzeugs bedürfen keiner Änderung oder Modifikation in irgendeiner Form, um die Hybridisierung oder Umrüstung über den Hauptsicherungskasten 908 hinaus durchzuführen (Fig. 9). Die Stromversorgung des Hauptsicherungskastens 908 erfolgt über den Gleichstrom / Gleichstrom -Wandler 6 anstelle einer artverwandten 12 V Autobatterie. Turbinensteuerung, Inbetriebnahme und Zündung werden über ein separates 10 V Netzteil im Fahrzeug versorgt, das unabhängig von der Hauptbatterie 1 arbeitet.

Die Tabelle gemäß Fig. 8 zeigt die Leistungsmerkmale für Fahrzeuge vor der Nachrüstung der Hilfsenergieeinheit und nach der Nachrüstung der Hilfsenergieeinheit sowie Vergleiche zwischen verschiedenen Varianten solcher Fahrzeuge mit unterschiedlichen Motortypen, entsprechend einigen Ausführungsformen der vorliegenden Erfindung. Das hybridisierte oder umgerüstete Fahrzeug mit dem Hilfsenergiesystem 100, bestehend aus der Hilfsenergieeinheit 200, wird mit dem entsprechenden OEM-Basismodell, dem entsprechenden OEM-Turboladermodell und dem entsprechenden OEM-Nachfolgemodell, z.B. der Linie, die viele Jahre später produziert wird, verglichen. Die Kraftstoffverbrauchs- und Reichweitenschätzungen für alle in Fig. 8 aufgeführten Fahrzeuge basieren auf "hohen" und "niedrigen" Werten der U.S. Environmental Protection Agency (EPA), der Hersteller und den gemeldeten Daten. Die Reichweitenschätzungen für das Fahrzeug basieren auf ERD Engineering®-Tests, die über einen Zeitraum von einem Jahr auf unterschiedlichen Strecken, Fahrbedingungen sowie unter unterschiedlichen Verkehrsbedingungen, z.B. von der Autobahn über die Stadt bis zum Stau, durchgeführt wurden.

Unter Bezugnahme auf FIG. 8, während das Gesamtgewicht des Fahrzeugs um ca. 150 kg erhöht wurde, hat das Fahrzeug letztendlich ein höheres Leistungsgewicht als das Basismodell und sein aufgeladener Zeitgenosse des Fahrzeugs, wodurch die Motorleistung erhöht wird, und wobei der elektrische Antriebsmotor 8 über ein Betriebsband in einem Bereich von etwa 0 U/min bis etwa 3500 U/min konstante, nahezu maximale Drehmomente und konstante, nahezu maximale Leistungen erzeugt, bevor die Leistung bei einer Überlastungsmotordrehzahl abbaubar ist. Das Fahrzeug hat ein Leistungsgewicht, eine Leistung, ein Drehmoment und eine Höchstgeschwindigkeit, die mindestens mit der des OEM-Fahrzeugs vergleichbar ist. Der Kraftstoffverbrauch hängt von den Fahrbedingungen ab. Das Fahrzeug hat eine durchschnittliche Reichweite von ca. 105 km und arbeitet ausschließlich im vollelektrischen Modus und ist damit konkurrenzfähig zu aktuellen Plug-In-Elektro- und Plug-In-Hybridfahrzeugen. Das Fahrzeug mit der Hilfsenergieeinheit 200, das einen vollen alternativen Kraftstofftank mit einer Größe verwendet, die einem OEM-Kraftstofftank ähnelt, kann eine Reichweite von ca. 600 km erreichen, also deutlich über der Reichweite vergleichbarer reiner Elektrofahrzeuge in seiner Klasse.

Unter Bezugnahme auf Fig. 8. ist das Fahrzeug mit der Hilfsenergieeinheit 200 ein Voll-Hybrid. Als solches ist das Fahrzeug konkurrenzfähig im Vergleich zu mehreren verwandten Hybridfahrzeugen und Antriebssträngen, wie dem Chevrolet® Volt® und Fisker® Karma®, sowie dem Toyota® Prius®, Camry® Hybrid, Ford® Escape® Hybrid, Mercury® Mariner® Hybrid, Kia® Optima® Hybrid und dergleichen. Dadurch ist das Fahrzeug mit der Hilfsenergieeinheit 200 in der Lage, durch beide Arten von Antriebssystemen betrieben zu werden und die Leistung und Effizienz eines Elektrofahrzeuges während der Beschleunigung mit der Stromerzeugungseffizienz eines Gasturbinentriebwerks bei optimaler Drehzahl zu verbinden.

Unter Bezugnahme auf Fig. 8 enthält das Fahrzeug ' mit der Hilfsenergieeinheit 200 Merkmale, wie z.B. das kompakte Turbinentriebwerk 10, z.B. ein kompaktes Gasturbinentriebwerk, wodurch ein erhöhtes Leistungsgewicht zur Verfügung gestellt wird und die Verwendung eines Verbrennungsmotors entfällt. Die Hilfsenergieeinheit 200 im Fahrzeug ist kompakter und leichter als vergleichbare Verbrennungsmotoren mit vergleichbarer Leistung und kann dennoch mit handelsüblichem Kraftstoff, wie z.B. #2-Dieselkraftstoff, betrieben werden. Der Generator 20, der aus einem drehmomentgesteuerten Generator besteht, ermöglicht es der Turbine des Motors 10, sich mit optimaler Drehzahl zu drehen, um einen optimalen Kraftstoffverbrauch zu erzielen und gleichzeitig genügend Leistung zur Verfügung zu stellen, damit das Fahrzeug ausschließlich auf der Hilfsenergieeinheit 200 betrieben werden kann, oder, falls erforderlich, als Leistungsverstärker zu fungieren, wenn es in einem vollelektrischen Modus betrieben wird. Das Hilfsenergiesystem 100, bestehend aus der Hilfsenergieeinheit 200 mit dem kompakten Turbinentriebwerk 10, z.B. einem Gasturbinenmotor, optimiert strukturell und funktionell das Ansaugsystem, das Kühlsystem und das Abgassystem des Fahrzeugs , wobei die Hilfsenergieeinheit 200 im Vergleich zu einem verwandten Verbrennungsmotor leichter und komplexer ist.

Dieser Schaltplan zeigt unter Bezugnahme auf Fig. 9 einen Hilfsstromkreis 900, der eine Gleichrichterschaltung für eine Gleichrichtereinheit 30 umfasst, mit der ein Hilfsenergiesystem 100, bestehend aus einer Hilfsenergieeinheit 200, gemäß einer Ausführungsform der vorliegenden Erfindung betreibbar ist. Wie in Bezug auf Fig. 2 beschrieben, umfasst die Gleichrichtereinheit 30 eine Gleichrichterschaltung 31, wobei die Gleichrichterschaltung 31 mindestens eine entsprechende oder separate Vollweggleichrichterschaltung 901, z.B. den Vollweggleichrichter oder den Drehstrombrückengleichrichter, umfasst, die so konfiguriert ist, dass sie einen Strom von etwa 400 A bei einer Spannung von etwa 1000 V verarbeitet und einen Gleichspannungsausgang erzeugt. Der resultierende Gleichstrom-Ausgang von jeweils mindestens einer entsprechenden Vollwellen-Gleichrichterschaltung 901, z.B. der Vollwellenbrückengleichrichter durch einen entsprechenden Kondensator 902, wie z.B. einen 20.000-µF-Kondensator, weiter gefiltert wird, wobei der entsprechende Kondensator 902 jede Spannungswelligkeit reduziert, bevor er Energie an ein primäres Energiesystem, wie z.B. das Hauptstromsystem 700 (Fig. 7) überträgt des Fahrzeugs, wie z.B. das Fahrzeug (Fig. 5A), parallel zur Energieübertragung auf den Akkupack, wie z.B. den Hauptbatteriepack 1 (Fig. 7).

Unter Bezugnahme auf Fig. 9, wie im Zusammenhang mit Fig. 4A und 4B beschrieben, umfasst das Hilfsenergiesystem 100 außerdem ein Batteriemanagementsystem (BMS) 906, z.B. das Orion® BMS, mit ca. 48 Zellenanzapfungen 906a und einem Hall-Effekt-Stromsensor (nicht abgebildet) in Bezug auf ein Pluskabel (nicht abgebildet) des Hauptstrompakets 1, zu dessen Überwachung. Wie in Fig. 5A beschrieben, wird die Antriebsleistung durch die Motorregelung 4 geregelt, z.B. der Netgain® Warp-Drive® Industrial Motor Controller (WDIC) 903 mit einer Gesamtspannungskapazität von ca. 300 V und einer Gesamtstromkapazität von ca. 1400 A. Die Hybridisierung oder Umrüstung umfasst ferner die Montage der Hilfsenergieeinheit 200 neben dem Antriebsmotor 8 (Fig. 2) im Motorraum, z.B. in dem durch Entfernen des fossil betriebenen OEM-Motors freigewordenen Leerraum (nicht abgebildet). Der Wechselstrom-Ausgang der Hilfsenergieeinheit 200 wird von einem Satz von 200 A Wechselstromschaltern, wie z.B. einem Satz Turbinenschalter 907, vor dem Gleichrichterschaltkreis 31 und hinter der Brandschutzwand verarbeitet, die von dort aus parallel zum Akkupack geschaltet werden. z. B. der Akkupack 1.

Unter Bezugnahme auf Fig. 9, wie im Zusammenhang mit Fig. 7 beschrieben, wenn das Fahrzeug im Hybridbetrieb arbeitet, wird das kompakte Turbinentriebwerk 10 der Hilfsenergieeinheit 200 aktiviert und über ein Sicherheitsrelais mit anderen Komponenten des Hauptstromsystems 700 gekoppelt, wobei ein Satz von Dioden den Stromrückfluss in die Hilfsenergieeinheit 200 oder den Hauptbatterieblock 1 verhindert. Das Sicherheitsrelais besteht aus einem Hochspannungsrelais, das für das Ein- und Ausschalten des Hilfsenergiesystems 100 sowie einer Hochstromsicherung konfiguriert ist.

Der Wechselstrom-Ausgang der Hilfsenergieeinheit 200 wird in Gleichstrom umgewandelt, dessen Amplitude durch die Turbinendrehzahl geregelt werden kann, und durch ein Paar 20.000 µF Kondensatoren 902 gefiltert und weiter geregelt, bevor er an das Hauptstromnetz angeschlossen wird. Zu diesem Zeitpunkt erhält die Hilfsenergieeinheit 200 die Hauptlast des Hauptenergiesystems 700 und die Antriebslast von der Hauptbatterie 1, wodurch die Hauptbatterie 1 auf die Versorgung des Fahrzeug-Hilfssystems 7 verwiesen wird.

Die Hilfsenergieeinheit 200 wird, wie in Fig. 7 beschrieben, parallel zum Hauptbatterie-Pack 1 im Hauptstromnetz 700 angeschlossen, so dass das Hauptstromnetz 700 die Last teilen und ggf. den Hauptbatterie-Pack 1 laden kann. Durch die Parallelschaltung kann das Fahrzeug bei Bedarf auch nur auf der Hilfsenergieeinheit 200 betrieben werden. Unabhängig von der Betriebsart werden alle Hilfssysteme über den Gleichstrom/Gleichstrom-Wandler 6 mit einer Eingangsspannung im Bereich von ca. 120 bis ca. 240 V versorgt, so dass der Gleichstrom/Gleichstrom-Wandler 6 auch dann einen konstanten 12 V Ausgang für die Hilfssysteme beibehält, wenn die Hauptbatterie 1 nicht mehr in der Lage ist, das Fahrzeug zu betreiben. Zu den Hilfssystemen gehören das Batteriemanagementsystem 5, die Motorsteuerung 4, Sicherheitsschütze und Fahrzeugnebenaggregate (ohne Abbildung), wie Scheinwerfer, Hupe, Blinker, Bremslicht und Bremskraftverstärker. Die Zusatzsysteme des Fahrzeugs erfordern keine Änderung oder Modifikation oder keinen Umbau, über den Hauptsicherungskasten 908 hinaus, um die Hybridisierung durchzuführen. Die Stromversorgung des Hauptsicherungskastens 908 erfolgt über den Gleichstrom / Gleichstrom-Wandler 6 anstelle einer artverwandten 12 V Autobatterie. Turbinensteuerung, Inbetriebnahme und Zündung werden von einer separaten 10 V Spannungsversorgung im Fahrzeug versorgt, die unabhängig von der Hauptbatterie 1 arbeitet.

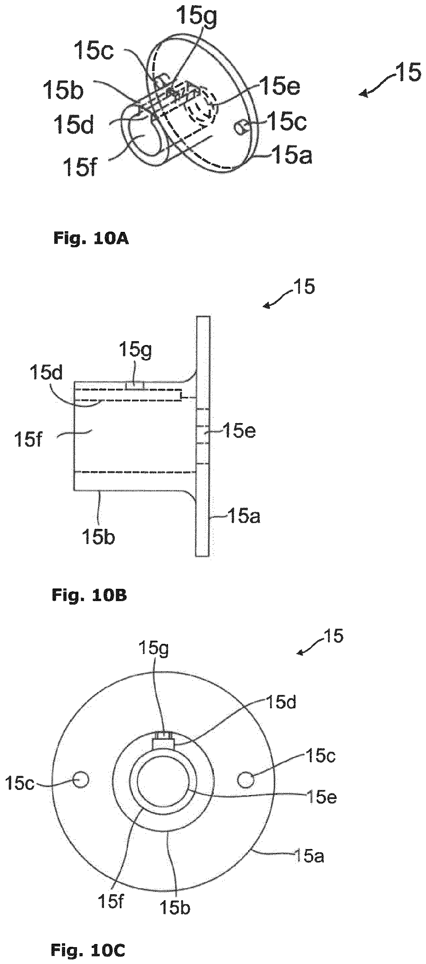

Fig. 10A, 10B und 10C stellen eine perspektivischen Ansicht, eine Seitenansicht und eine Rückansicht einer Turbinenwellenkupplung 15 dar, die so konfiguriert ist, dass sie eine Abtriebswelle 11 eines kompakten Turbinentriebwerks 10 mit einer Eingangswelle 21 eines Generators 20 koppelt (Abb. 1 und 2), in Übereinstimmung mit einer Ausführungsform der vorliegenden Erfindung. Beispielhafte Sonderabmessungen werden gezeigt. Die Turbinenwellenkupplung 15 besteht aus einem Flanschabschnitt 15a und einem Hülsenabschnitt 15b, die entweder einstückig oder getrennt ausgebildet sein können, wobei der Hülsenabschnitt 15b in konzentrischer Beziehung zum flange Abschnitt 15a steht.

Unter Bezugnahme auf Fig. 10A, 10B und 10C zusammen weist der Flanschabschnitt 15b eine Öffnung 15e mit einer Innenabmessung aufweist, die einer Außenabmessung der Abtriebswelle 11 angenähert ist, wobei eine Innenabmessung der Öffnung 15e eine ausreichende Toleranz in Bezug auf die Außenabmessung der Abtriebswelle 11 aufweist. Diese ausreichende Toleranz reicht von ca. - 0,00254 cm bis ca. + 0,00254 cm und vorzugsweise von ca. - 0,00127 cm bis ca. + 0,00127 cm. Der Flanschabschnitt 15a ist so konfiguriert, dass er sowohl mit der Abtriebswelle 11 als auch mit einem Abtriebsflansch 11a (Fig. 1 und 2) des Kompakttriebwerks 10 zusammenpasst. Der Hülsenabschnitt 15b ist für die Aufnahme der Eingangswelle 21 des Generators 20 ausgelegt. Der Flanschabschnitt 15a umfasst mindestens ein Hahnloch 15c zur Aufnahme mindestens eines Befestigungsmittels (nicht abgebildet), wobei der Flanschabschnitt 15a und der Abtriebsflansch 11a über das mindestens eine Befestigungsmittel miteinander verbindbar sind, wodurch die Strukturstabilität erhöht wird und ein Verrutschen während der Drehung des Abtriebsflansches 11a verhindert wird.

Unter Bezugnahme auf Fig. 10A, 10B und 10C zusammen umfasst der Hülsenabschnitt 15b mindestens einen Kanal 15d zur Erleichterung der Aufnahme der Eingangswelle 21. Der Hülsenabschnitt 15b umfasst eine Öffnung 15f mit einem inneren Durchmesser, der einem Außenmaß der Eingangswelle 21 angenähert ist, wobei ein Innenmaß der Öffnung 15f eine ausreichende Toleranz in Bezug auf das Außenmaß der Eingangswelle 21 aufweist. Diese ausreichende Toleranz reicht von ca. - 0,00254 cm bis ca. + 0,00254 cm und vorzugsweise von ca. - 0,00127 cm bis ca. + 0,00127 cm. Der Hülsenabschnitt 15b umfasst mindestens ein Durchgangsloch 15g, das sich von dem mindestens einen Kanal 15d erstreckt, wobei das mindestens eine Durchgangsloch 15g zur Aufnahme mindestens eines Befestigungsmittels ausgebildet ist, wobei der Hülsenabschnitt 15b und die Eingangswelle 21 miteinander verbindbar sind, wodurch die Strukturstabilität erhöht wird und ein Verrutschen während der Drehung des Hülsenabschnitts 15b verhindert wird. Weiterhin kann der mindestens eine Kanal 15d auch einen in Längsrichtung vorstehenden Teil (nicht dargestellt) der Eingangswelle 21 aufnehmen, wodurch die Strukturstabilität weiter erhöht wird und ein Verrutschen während der Drehung des Hülsenteils 15b weiter verhindert wird. Die mindestens eine Durchgangsbohrung 15g kann ein Gewinde zur Aufnahme mindestens eines Befestigungsmittels (nicht abgebildet), wie z.B. einer Stellschraube, enthalten. einen Bolzen, eine Maschinenschraube und dergleichen.

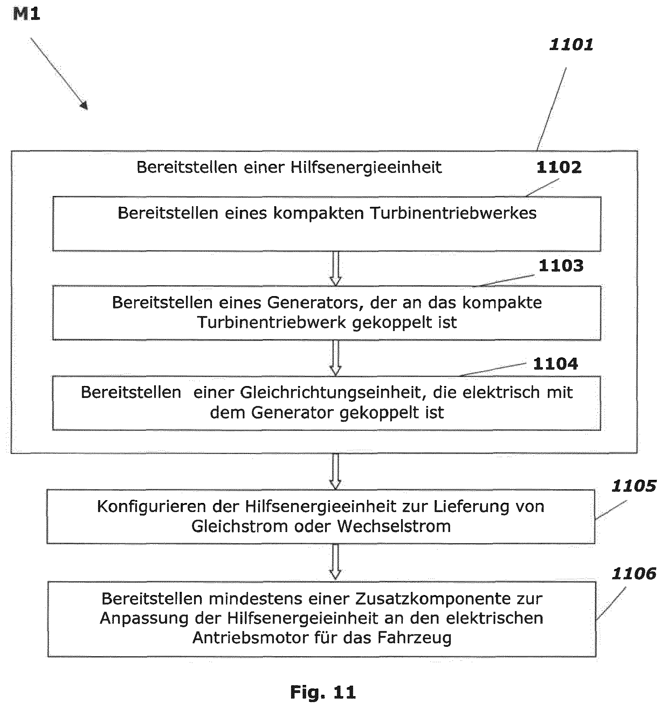

Das Flussdiagramm nach Fig. 11 veranschaulicht ein Verfahren M1 zur Herstellung eines Hilfsenergiesystems 100 zur Bereitstellung von Hilfsenergie für einen elektrischen Antriebsmotor 8 eines Fahrzeugs in Übereinstimmung mit einer Ausführungsform dieser Erfindung. Das Verfahren M1 umfasst: Bereitstellen einer Hilfsenergieeinheit 200, wie durch Block 1101 angegeben, Bereitstellen der Hilfsenergieeinheit 200, umfassend Bereitstellen eines kompakten Turbinentriebwerks 10, wie durch Block 1102 angegeben, Bereitstellen eines Generators 20, der mit dem kompakten Turbinentriebwerk 10 gekoppelt ist. wie durch Block 1103 angegeben, und Bereitstellen einer Gleichrichtereinheit 30, die mit dem Generator 20 gekoppelt ist, wie durch Block 1104 angegeben, und Bereitstellen der Hilfsenergieeinheit 200, umfassend das Konfigurieren der Hilfsenergieeinheit 200, um einen von einem Wechselstrom-Ausgang und einem Gleichstrom-Ausgang bereitzustellen, wie durch Block 1105 angegeben; und Bereitstellung mindestens eines Vorgängers (nicht abgebildet) zur Anpassung der Hilfsenergieeinheit 200 mit einem elektrischen Antriebsmotor 8 in Bezug auf das Fahrzeug, wie in Block 1106 angegeben.

Unter Bezugnahme auf FIG. 11 umfasst das Bereitstellen der Hilfsenergieeinheit 200, wie in Block 1101 angegeben, das Konfigurieren der Hilfsenergieeinheit 200 zum Nachrüsten in Bezug auf ein Fahrzeug, wobei das Fahrzeug in ein Serien-Hybridfahrzeug umrüstbar ist, Bereitstellen des kompakten Turbinentriebwerks 10, wie in Block 1102 angegeben, umfassend das Bereitstellen eines JetCat® SPT15-RX Gasturbinen-Turbinen-Turboprop-Motors mit einer Getriebeuntersetzung von etwa 14,1 : 1, Bereitstellen des Generators 20, wie in Block 1103 angegeben, Bereitstellen eines kundenspezifischen Heinzmann® PMS-150 Permanentmagnet-Synchrongenerators und Bereitstellen der Gleichrichtereinheit 30, wie in Block 1104 angegeben, Bereitstellen eines kundenspezifischen Vollweggleichrichters und einer Gleichrichterschaltung 31, wobei die Gleichrichterschaltung 31 eine Kondensatorschaltung umfasst. Die Bereitstellung des kompakten Turbinentriebwerks 10, wie in Block 1102 angegeben, umfasst die Konfiguration des kompakten Turbinentriebwerks 10 für den Betrieb mit mindestens einem Kraftstoff aus Kerosin, Dieselkraftstoff und Biodieselkraftstoff.

Unter Bezugnahme auf Fig. 11 umfasst die Bereitstellung des kompakten Turbinentriebwerks 10, wie in Block 1102 angegeben, die Konfiguration des kompakten Turbinentriebwerks 10 für den Betrieb mit einem Schmiermittelzusatz, wie z.B. einem Schmiermittelzusatz auf Silikonbasis, zur Verbesserung bestimmter Betriebsbedingungen. Der Schmiermittelzusatz wird verwendet, wenn das kompakte Turbinentriebwerk 10 mit leichterem Kohlenwasserstoffkraftstoff wie Kerosin, JP-7, JP-8 und Jet-A1 betrieben wird, wobei das Verhältnis des Schmiermittelzusatzes zum Kraftstoff etwa 1:20 beträgt. Beim Betrieb des kompakten Turbinentriebwerks 10 mit Diesel, z.B. ein #2-Dieselkraftstoff, der ein ausreichend schwerer Kraftstoff ist, ein Schmiermittelzusatz nicht erforderlich ist, aber wahlweise für eine lange Lebensdauer verwendet werden kann, wobei das Verhältnis des Schmiermittelzusatzes zu dem Kraftstoff einen Bereich von etwa 1:20 bis etwa 1:80 umfasst, und wobei das Verhältnis des Schmiermittelzusatzes zu dem Kraftstoff vorzugsweise etwa 1:20 umfasst, wobei das kompakte Turbinentriebwerk 10 eine Nennleistung von etwa 15 kW liefert. Das kompakte Turbinentriebwerk 10 hat einen optimalen Kraftstoffverbrauch bei ca. 75.000 U/min und eine maximale sichere Leistung bei ca. 132.000 U/min. Das kompakte Turbinentriebwerk 10 hat eine Getriebeuntersetzung von ca. 14,1 : 1 vor der Abtriebswelle 11 der Gasturbine und ist in der Lage, ein Drehmoment von ca. 32,7 Nm im Endübersetzungsverhältnis zu liefern.

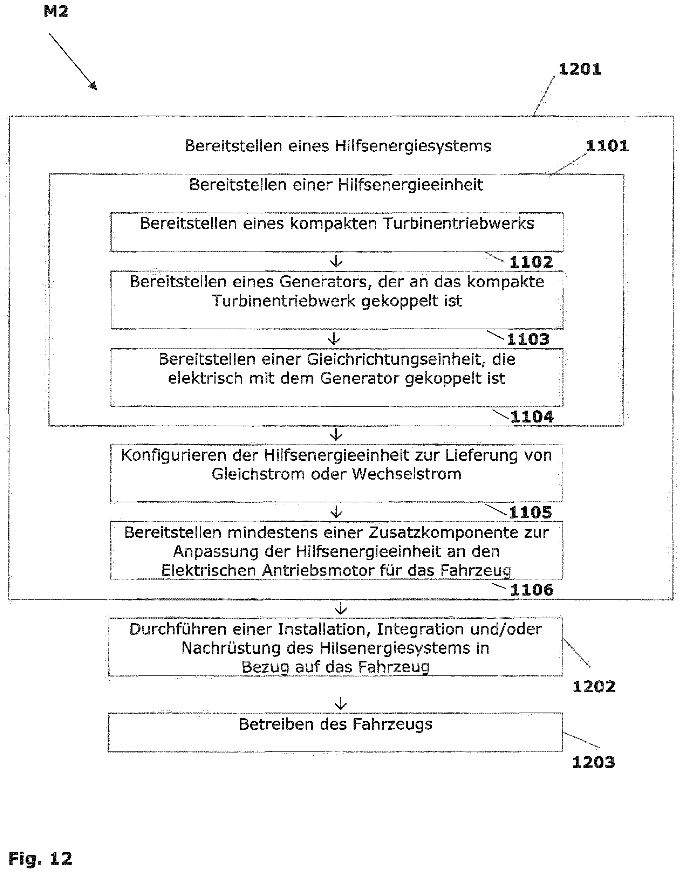

Das Flussdiagramm nach Fig. 12 veranschaulicht ein Verfahren M2 zur Bereitstellung von Hilfsenergie für einen elektrischen Antriebsmotor 8 eines Fahrzeugs über ein Hilfsenergiesystem 100 in Übereinstimmung mit einer Ausführungsform der vorliegenden Erfindung. Das Verfahren M2 umfasst: Bereitstellen des Hilfsenergiesystems 100, wie durch Block 1201 angegeben, umfassend: Bereitstellen einer Hilfsenergieeinheit 200, wie in Block 1101 angegeben, Bereitstellen der Hilfsenergieeinheit 200, umfassend Bereitstellen eines kompakten Turbinentriebwerks 10, wie in Block 1102 angegeben, Bereitstellen eines Generators 20, der mit dem kompakten Turbinentriebwerk 10 gekoppelt ist, wie in Block 1103 angegeben, und Bereitstellen einer Gleichrichtereinheit 30, die mit dem Generator 20 gekoppelt ist, wie in Block 1104 angegeben, und Bereitstellen der Hilfsenergieeinheit 200, umfassend das Konfigurieren der Hilfsenergieeinheit 200, um einen Wechselstrom-Ausgang und einen Gleichstrom-Ausgang bereitzustellen, wie in Block 1105 angegeben; und Bereitstellen mindestens einer Zusatzkomponente (nicht abgebildet) zum Anpassen der Hilfsenergieeinheit 200 mit einem elektrischen Antriebsmotor 8 in Bezug auf das Fahrzeug, wie in Block 1106 angegeben; Durchführen einer Installation, Integration und Nachrüstung des Hilfsenergiesystems 100 in Bezug auf das Fahrzeug, wie in Block 1202 angegeben; und Betreiben des Fahrzeugs, wie in Block 1203 angegeben.

Unter Bezugnahme auf FIG. 12 umfasst das Bereitstellen der Hilfsenergieeinheit 200, wie in Block 1101 angegeben, das Konfigurieren der Hilfsenergieeinheit 200 als nachrüstbar in Bezug auf ein Fahrzeug, wobei das Fahrzeug in ein Serienhybridfahrzeug umrüstbar ist, Bereitstellen des kompakten Turbinentriebwerks 10, wie in Block 1102 angegeben, umfassend das Bereitstellen eines JetCat® SPT15-RX Gasturbinen-Turboprop-Motors mit einer Getriebeuntersetzung von etwa 14.1 :1. Bereitstellen des Generators 20, wie in Block 1103 angegeben, das Bereitstellen eines kundenspezifischen Heinzmann® PMS-150 Permanentmagnet-Synchrongenerators und das Bereitstellen der Gleichrichtereinheit 30, wie in Block 1104 angegeben, das Bereitstellen eines kundenspezifischen Vollweggleichrichters und einer Gleichrichterschaltung 31, wobei die Gleichrichterschaltung 31 eine Kondensatorschaltung umfasst. Die Bereitstellung des kompakten Turbinentriebwerks 10, wie in Block 1102 angegeben, umfasst die Konfiguration des kompakten Turbinentriebwerks 10 für den Betrieb mit mindestens einem Kraftstoff aus Kerosin, Dieselkraftstoff und Biodieselkraftstoff.

Bei der Bereitstellung des kompakten Turbinentriebwerks 10, wie in Block 1102 angegeben, wird das kompakte Turbinentriebwerk 10 für den Betrieb mit einem Schmiermittelzusatz konfiguriert. wie z.B. ein Schmiermittel auf Silikonbasis, um bestimmte Betriebsbedingungen zu verbessern. Der Schmiermittelzusatz wird verwendet, wenn das kompakte Turbinentriebwerk 10 mit leichterem Kohlenwasserstoffkraftstoff wie Kerosin, JP-7, JP-8 und Jet-A1 betrieben wird, wobei das Verhältnis des Schmiermittelzusatzes zum Kraftstoff etwa 1:20 beträgt. Beim Betrieb des kompakten Turbinentriebwerks 10 mit Diesel, z.B. ein #2-Dieselkraftstoff, der ein ausreichend schwerer Kraftstoff ist, ein Schmiermittelzusatz nicht erforderlich ist, aber optional für eine lange Lebensdauer verwendet werden kann, wobei das Verhältnis des Schmiermittelzusatzes zu dem Kraftstoff einen Bereich von etwa 1:20 bis etwa 1:80 umfasst, und wobei das Verhältnis des Schmiermittelzusatzes zu dem Kraftstoff vorzugsweise etwa 1:20 umfasst, wobei das kompakte Turbinentriebwerk 10 eine Nennleistung von etwa 15 kW liefert. Das kompakte Turbinentriebwerk 10 hat einen optimalen Kraftstoffverbrauch bei ca. 75.000 U/min und eine maximale sichere Leistungsabgabe bei ca. 132.000 U/min. Das kompakte Turbinentriebwerk 10 hat eine Getriebeuntersetzung von ca. 14. I :1 vor der Abtriebswelle 11 der Gasturbine und kann ein Drehmoment von ca. 32,7 Nm bei der Endübersetzung liefern.

Unter Bezugnahme auf Fig. 1 bis 12 kann das Hilfsenergiesystem 100 außerdem mindestens einen der folgenden Komponenten enthalten: einen Gleichstrom-zu-Wechselstrom-Wandler (nicht abgebildet), elektrische Wechselrichter und Leistungskonstanten. Im Hinblick auf den Kraftstoffverbrauch des Fahrzeugs basieren diese Schätzungen auf Tests, die sowohl mit der Hilfsenergieeinheit 200 unter Last als auch mit dem Fahrzeug unter unterschiedlichen Fahrbedingungen durchgeführt wurden. Wie bei jedem Fahrzeug ist es nicht möglich, eine genaue Reichweite unter allen Bedingungen zu erreichen, da der Kraftstoff- und Stromverbrauch je nach Straßenzustand, Verkehrsbedingungen und sogar dem Verhalten des Fahrers variiert. Umfangreiche Tests haben jedoch ergeben, dass ein Batteriepack 1, bestehend aus einem 25 kWh Batteriepack, im Fahrzeug eine Reichweite von mindestens ca. 65 km bis ca. 145 km ergeben hat. Der elektrische Antriebsmotor 8 hat eine Leistungsaufnahme im Bereich von ca. 20 A bis ca. 60 A im Regelbetrieb. bei ca. 250 A für kurze Zeiträume, z.B. bei starkem Verkehr, "sportlichem" Fahren, Rennsport und Beschleunigung.

Durch die Hilfsenergieeinheit 200 ist es möglich, Reichweitenschätzungen durchzuführen, da das Gasturbinentriebwerk 10 bei konstanter Drehzahl arbeitet, und die Hauptwelle der Turbine in einem Bereich von ca. 30.000 U/min (Leerlauf) bis zu 157.000 U/min (Vollgas) dreht, wodurch vorhersehbare Verbrauchsdaten mit geringen Schwankungen im Bereich von ca. 80 ml/min bis ca. 550 ml/min, je nach Drosselklappenstellung, entstehen. Da die Hauptwellendrehzahl selbst unter unterschiedlichen Lastbedingungen nur gering schwankt, entfallen viele der unvorhersehbaren Variablen in den Verbrauchsschätzungen eines konventionellen Verbrennungsmotors. Erste Tests des Hilfssystems 100, bestehend aus der Hilfsenergieeinheit 200, ergaben einen geschätzten Verbrauchsbereich von ca. 340 km bis ca. 615 km, z.B. unter Autobahnbedingungen und Geschwindigkeiten. Bei einer regulären Autobahngeschwindigkeit von ca. 100 km/h ist der Kraftstoffverbrauch in den Grenzen von ca. 3 km/I bis zu 21 km/I, abhängig von der Drosselstellung der Turbine, geschätzt. Beim Betrieb des Fahrzeugs bei einer Turbinendrehzahl von 80.000 U/min ist der Kraftstoffverbrauch ca. 185 ml/min bis zu 200 ml/min, was einen Bereich von 8,3 bis 9 km/I bedeutet (11 bis 12 I pro 100 km).

Die Hilfsenergieeinheit 200 erreicht durch den Einsatz des kompakten Turbinentriebwerks 10, z.B. eines kompakteren und leichteren Gasturbinenmotors, ein höheres Leistungsgewicht und einen besseren Kraftstoffverbrauch als verwandte Generatormotoren, wie sie im Chevrolet® Volt® verwendet werden. Die Verwendung von Dieselkraftstoff oder sogar Biodieselkraftstoff rationalisiert den Betrieb und die Verteilung sowohl für den Verbraucher als auch für die Infrastruktur, da zumindest der Dieselkraftstoff leicht verfügbar ist, der Biodieselkraftstoff leicht aufbereitet werden kann und die Abhängigkeit von dem sich noch erst allmählich ausdehnenden Ladenetzwerks entfällt. Ebenso ist die Ladekomponente des Hilfsenergiesystems 100 so konfiguriert, dass sie eine 220 V Ladung über einen J1772-Anschluss an einer elektrischen Ladestation sowie eine typische 110 V Steckdose nutzt, was die Nutzung und Wartung weiter vereinfacht.

Während das elektrische Aufladungsnetz in Kalifornien derzeit expandiert und genügende Deckung in den Hauptbevölkerungszentren hat, um eine großen Anzahl von Elektrofahrzeugen zu versorgen, ist dies in anderen Teilen der Vereinigten Staaten von Amerika oder in anderen Ländern in der Welt noch nicht der Fall. Allerdings sind Dieselkraftstoff und Biodieselkraftstoff an vielen Orten der Welt ohne oder mit eingeschränktem Zugang zum Stromnetz verfügbar. Die Hilfsenergieeinheit 200 mit dem Generator 20, z.B. einer tragbaren, kompakten und leichten Stromerzeugungseinheit, ist so konfiguriert, dass sie sowohl Wechsel- als auch Gleichströme liefert; und so hat die Hilfsenergieeinheit 200 viele Implementierungen an geografischen Orten, wo zumindest ein Teil der verfügbaren Elektrizität es ermöglicht, dass das Fahrzeug viel verbraucherfreundlicher ist als ein reines Elektrofahrzeug.

Das Hilfsenergiesystem 100 die Hilfsenergieeinheit 200 weist eine einzigartige Konfiguration auf, wobei die Integration des Hilfsenergiesystems 100 in das Fahrzeug den Zustand der Hybridfahrzeugindustrie verbessert. Die Hilfsenergieeinheit 200 hat eine einzigartige Konfiguration, bestehend aus dem kompakten Turbinentriebwerk 10, z.B. einem Gasturbinenmotor, dem Generator 20, z.B. einem elektrischen Generator, und wird in einem Fahrzeug eingesetzt, wodurch das Fahrzeug in ein Hybridfahrzeug umgewandelt wird. Die Hilfsenergieeinheit 200 ist gewichtsmäßig stärker als die derzeit auf dem Markt befindlichen verwandten Kunstansätze, wobei das Fahrzeug in der Lage ist, die Leistung vieler derzeit bekannter Hybridfahrzeuge zu erreichen.

Unter Bezugnahme auf Fig. 1 bis 12 überschreitet das Fahrzeug die Spezifikationen und Konstruktionsparameter sowohl des Fahrzeugs, z.B. des Basisfahrzeugs, als auch seines turboaufgeladenen Pendants. Die Leistungswerte des Fahrzeuges entsprechen oder übertreffen viele der damit verbundenen kunstgewerblichen Coupes und Limousinen. Die Nachrüstung oder Aufrüstung eines Fahrzeuges zu einem Fahrzeug ist ein rationalisierter Installationsprozess und lohnt sich.

Natürlich ist die Erfindung nicht auf die dargestellten Ausführungsbeispiele beschränkt. Weitere Ausgestaltungen sind möglich, ohne den Grundgedanken zu verlassen. So können anstelle der in der Beschreibung und den Patentansprüchen genannten Markenprodukte auch vergleichbare Produkte verwendet werden.

## Patentansprüche

1. Hilfsenergiesystem (100) zur Bereitstellung von Hilfsenergie für ein Fahrzeug, wobei das System umfasst: eine Hilfsenergieeinheit (200) mit einem kompakten Turbinentriebwerk (10), einem Generator (20), der mit dem kompakten Turbinentriebwerk (10) gekoppelt ist, und eine Gleichrichtereinheit (30), die mit dem Generator (20) gekoppelt ist, wobei die Hilfsenergieeinheit (200) so konfiguriert ist, dass sie entweder einen Wechselstrom oder einen Gleichstrom liefert, und mindestens eine Zusatzkomponente zur Anpassung der Hilfsenergieeinheit (200) an einen elektrischen Antriebsmotor für das Fahrzeug.

2. System nach Anspruch 1,
**dadurch gekennzeichnet,**
**dass** die Hilfsenergieeinheit (200) in Bezug auf ein Fahrzeug nachrüstbar ist, wobei das Fahrzeug zu einem Serienhybridfahrzeug umgebaut wird.

3. System nach Anspruch 1 oder 2,
**dadurch gekennzeichnet,**
**dass** das kompakt Turbinentriebwerk (10) ein JetCat® SPT15-RX Gasturbinen-Turboprop-Triebwerk mit einer Untersetzung von ca. 14,1 : 1 ist.

4. System nach Anspruch 1, 2 oder 3,
**dadurch gekennzeichnet,**
**dass** der Generator (20) einen kundenspezifischen Heinzmann® PMS-150 Permanentmagnet-Synchrongenerator aufweist.

5. System nach einem der Ansprüche 1 bis 4,
**dadurch gekennzeichnet,**
**dass** die Gleichrichtereinheit (30) einen kundenspezifischen Vollweggleichrichter und eine Gleichrichterschaltung aufweist, wobei die Gleichrichterschaltung eine Kondensatorschaltung umfasst.

6. System nach einem der Ansprüche 1 bis 5,
**dadurch gekennzeichnet,**
**dass** das kompakte Turbinentriebwerk (10) für den Betrieb mit Kerosin, Dieselkraftstoff und/oder Biodieselkraftstoff ausgelegt ist.

7. System nach einem der Ansprüche 1 bis 6,
**dadurch gekennzeichnet,**
**dass** das kompakte Turbinentriebwerk (10) so konfiguriert ist, dass es mit einem Schmiermittelzusatz auf Siliziumbasis in einem Verhältnis von Zusatz zu Kraftstoff in einem Bereich von etwa 1 : 20 bis etwa 1 : 80 arbeitet, wobei das kompakte Turbinentriebwerk (10) eine Nennleistung von ca. 15 kW liefert, wobei das kompakte Turbinentriebwerk (10) einen optimalen Kraftstoffverbrauch bei ca. 75.000 U/min hat, wobei das kompakte Turbinentriebwerk (10) eine maximale sichere Leistung bei ca. 132.000 U/min hat, und wobei die Hilfsenergieeinheit (200) ein Drehmoment von ca. 32 Nm bei der Endübersetzung liefert.

8. System nach Anspruch 1,
**dadurch gekennzeichnet,**
**dass** es wenigstens einem Gleichstrom-zu-Wechselstrom-Wandler und/oder wenigstens einem elektrischen Wechselrichter und/oder wenigstens einen Power Conditioner Aufweis.

9. Verfahren zur Herstellung eines Hilfsenergiesystems (100) zur Bereitstellung von Hilfsenergie für ein Fahrzeug, wobei das Verfahren folgende Schritte aufweist:
- Bereitstellen einer Hilfsenergieeinheit (200) mit einem kompakten Turbinentriebwerk (10), einem Generator (20), der mit dem kompakten Turbinentriebwerk (10) gekoppelt ist, und mit einer Gleichrichtereinheit (30), die mit dem Generator (30) gekoppelt ist,
- Konfigurieren der Hilfsenergieeinheit (200), um entweder einen Wechselstrom oder einen Gleichstrom zu liefern, und
- Bereitstellen mindestens einer Zusatzkomponente zum Anpassen der Hilfsenergieeinheit an einen elektrischen Antriebsmotor in Bezug auf das Fahrzeug.

10. Verfahren zum Bereitstellen von Hilfsenergie für ein Fahrzeug über ein Hilfsenergiesystem (100), wobei das Verfahren folgende Schritte aufweist:
- Bereitstellen des Hilfsenergiesystems (100), umfassend: Bereitstellen einer Hilfsenergieeinheit (200) mit einem kompakten Turbinentriebwerk (10), einem Generator (20), der mit dem kompakten Turbinentriebwerk (10) gekoppelt ist, und einer Gleichrichtereinheit (30), die mit dem Generator (20) gekoppelt ist,
- Konfigurieren der Hilfsenergieeinheit (200), um entweder einen Wechselstrom oder einen Gleichstrom zu liefern,
. Bereitstellen mindestens einer Zusatzkomponente zum Anpassen der Hilfsenergieeinheit (200) an einen elektrischen Antriebsmotor in Bezug auf das Fahrzeug,
- Durchführen einer Installation, Integration und/oder Nachrüstung des Hilfsenergiesystems (100) in Bezug auf das Fahrzeug, wodurch ein Hybridfahrzeug bereitgestellt wird, und
- Betreiben des Hybridfahrzeugs.
